# FASCICULE DE BREVET EUROPEEN

(11) **EP 0 819 076 B1**
(45) Date de publication et mention de la délivrance du brevet: **16.12.1998**
(21) Numéro de dépôt: 96907423.6
(22) Date de dépôt: 11.03.1996
(51) Int. Cl.: B60T 11/236

(54) **MAITRE-CYLINDRE TANDEM A ETANCHEITE PERFECTIONNEE**
TANDEMHAUPTZYLINDER MIT VERBESSERTER ABDICHTUNG
TANDEM MASTER CYLINDER WITH AN IMPROVED SEALING FUNCTION

(30) Priorité: 05.04.1995 IT TO950257
(43) Date de publication de la demande: 21.01.1998
(73) Titulaire: ROBERT BOSCH SISTEMI FRENANTI S.p.A., 26013 Crema (IT)
(72) Inventeur: MANZO, Vincenzo, I-70026 Modugno (IT); VARRESE, Francesco, I-70032 Bitonto (IT)
(74) Mandataire: Bentz, Jean-Paul
(86) Numéro de dépôt international: EP9601030
(87) Numéro de publication internationale: WO9631377

(56) Documents cités:
- EP-A- 0 032 857
- GB-A- 626 222

## Description

La présente invention concerne un maître-cylindre tandem hydraulique comprenant : un corps percé d'un alésage essentiellement cylindrique fermé par un fond; des pistons primaire et secondaire susceptibles de coulisser de façon étanche dans l'alésage; une chambre de pression primaire définie entre les pistons primaire et secondaire cette chambre renfermant au moins un premier ressort exerçant entre les pistons une première force élastique qui tend à écarter ces pistons l'un de l'autre; une chambre de pression secondaire définie entre le piston secondaire et le fond, cette chambre renfermant au moins un second ressort exerçant entre le piston secondaire et le fond une seconde force élastique dans un sens qui tend à écarter ce piston secondaire du fond; des premier et second joints respectivement portés par les pistons primaire et secondaire, pour assurer une étanchéité de la chambre de pression primaire; et une bague interposée entre le premier ressort et le second joint, montée à coulissement sur une portée du piston secondaire, et susceptible de repousser le second joint contre un épaulement du piston secondaire pour transmettre au second joint une force de compression variant avec la première force élastique.

Les maîtres-cylindres de ce type sont aujourd'hui utilisés de façon très courante.

Un problème qui se pose classiquement dans les maîtres-cylindres tandem est de faire en sorte que la pression dans la chambre secondaire soit aussi voisine que possible de celle qui règne dans la chambre primaire.

L'une des difficultés à surmonter pour résoudre ce problème réside dans le caractère antinomique de deux impératifs, à savoir d'une part la nécessité de réduire les frottements entre le cylindre et les différents joints, notamment le second poir réduire la différence de pression entre les chambres, et d'autre part la nécessité d'assurer l'étanchéité des joints même pour les pressions les plus élevées que le maître-cylindre doit pouvoir délivrer.

La présente invention a pour but de proposer un maître-cylindre permettant de satisfaire simultanément ces deux impératifs.

A cette fin, le maître-cylindre tandem de l'invention est essentiellement caractérisé en ce que la portée du piston secondaire présente une butée limitant le coulissement de la bague en direction du second joint, de manière à limiter la compression du second joint.

En outre, selon le mode de réalisation préféré de l'invention, la bague porte des reliefs tournés vers ce second joint et appuie sur lui par l'intermédiaire de ces reliefs.

D'autres caractéristiques et avantages de l'invention ressortiront clairement de la description qui en est faite ci-après, à titre indicatif et nullement limitatif en référence aux dessins annexés, sur lesquels :
- La Figure 1 est une `vue en coupe d'un maître-cylindre tandem de l'art antérieur, susceptible de bénéficier de l'enseignement et des caractéristiques de l'invention;
- la Figure 2 est une vue en coupe agrandie d'un détail repéré par la référence II-III sur la figure 1, ce détail étant réalisé conformément à l'enseignement de l'art antérieur ;
- la Figure 3 est une vue en coupe agrandie du détail repéré par la référence II-III sur la figure 1, ce détail étant réalisé conformément a l'invention ; et
- la Figure 4 est une vue de face d'un détail de la Figure 3, vu suivant la ligne IV-IV de cette figure.

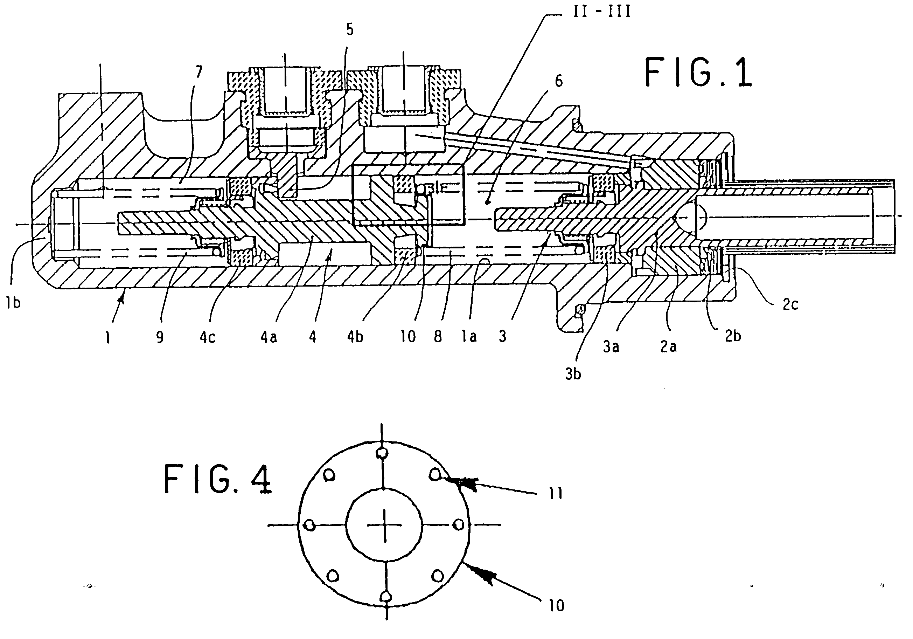

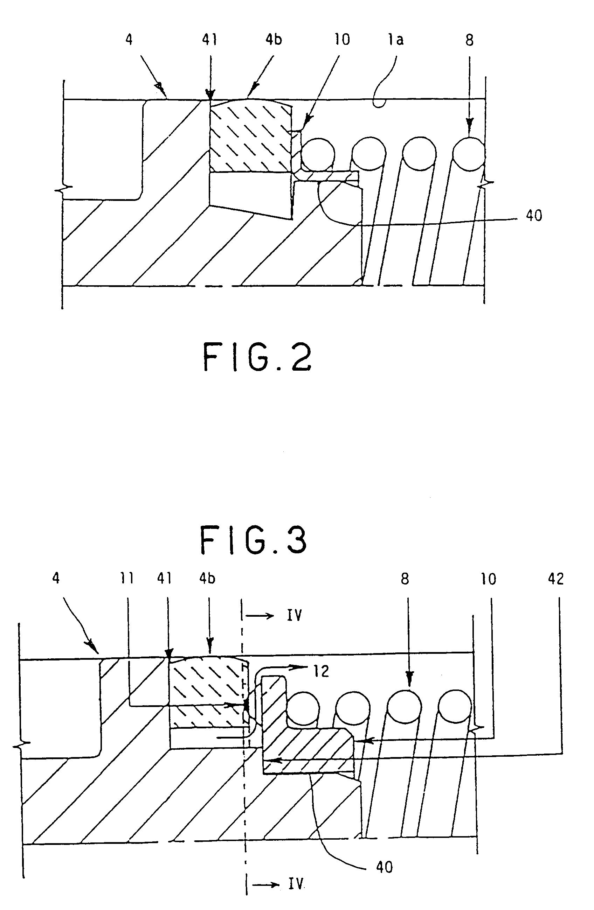

Le maître-cylindre tandem de l'invention n'étant remarquable que sur des points très précis qui seront détaillés plus loin de façon comparative en référence aux Figures 2 à 4, le maître-cylindre de la Figure 1 ressemble globalement à tous les maîtres-cylindres tandem connus, et sa description ne sera donc pas alourdie de détails bien connus de l'homme de l'art et non pertinents à l'égard de l'invention.

Ce maître-cylindre tandem comprend essentiellement un corps 1 percé d'un alésage longitudinal et cylindrique 1a fermé par un fond 1b et par des organes d'extrémité 2a, 2b, 2c assurant l'étanchéité de l'alésage la du côté de son ouverture.

Un piston primaire 3, comportant une tige 3a et un premier joint d'étanchéité 3b, peut coulisser de façon étanche dans l'alésage la, depuis une position de repos (celle que représente la Figure 1) jusqu'à une position d'actionnement située a la gauche de la position de repos sur la Figure 1, à une distance qui dépend de l'intensité de la foi-ce appliquée à la tige 3a.

De même, un piston secondaire 4, comportant une tige 4a et des second et troisième joints d'étanchéité 4b, 4c coulisse de façon étanche dans l'alésage 1a, depuis une position de repos (celle de la Figure 1) dans laquelle ce piston est arrêté par une butée 5, jusqu'à une position d'actionnement dans laquelle ce piston est plus proche du fond 1b.

Le volume 6 intermédiaire entre les pistons primaire et secondaire 3 et 4 définit une chambre hydraulique de pression primaire, et le volume 7 compris entre le piston secondaire 4 et le fond 1b de l'alésage définit une chambre hydraulique de pression secondaire.

Des premier et second ressorts 8, 9 sont respectivement disposés dans les chambres hydrauliques primaire et secondaire 6, 7, le premier ressort 8 exerçant entre les pistons 3, 4 une première force élastique qui tend à écarter ces pistons l'un de l'autre et le second ressort 9 exerçant entre le piston secondaire 4 et le fond 1b une seconde force élastique dans un sens qui tend à écarter ce piston secondaire du fond.

Enfin, comme dans l'art antérieur (figures 1 et 2), une bague 10 interposée entre le premier ressort 8 et le second joint 4b est montée à coulissement sur une portée 40 du piston secondaire pour repousser le second joint 4b contre un épaulement 41 du piston secondaire, transmettre à ce second joint 4b une force de compression qui varie avec la force élastique exercée par le ressort 8, et assurer ainsi une étanchéité d'autant plus efficace que la pression dans la chambre primaire 6 est élevée.

Toutefois, le problème que pose le mode de réalisation traditionnel représenté à la figure 2, et dont la mise en évidence fait partie intégrante de la présente invention, est que la charge du ressort 8, qui augmente beaucoup pendant la phase finale de freinage, provoque un écrasement axial très important du second joint 4b, donc une très forte expansion radiale de ce joint, ce dont résulte un frottement excessif de ce joint contre l'alésage 1a, et une différence de pression importante entre les chambres 6 et 7.

Selon l'invention (figure 3), ce problème est résolu en prévoyant que la portée 40 du piston secondaire 4 présente une butée 42 limitant le coulissement de la bague 10 en direction du second joint 4b.

D'autre part, selon un mode de réalisation préféré de l'invention (figure 4), la bague 10 porte des reliefs tels que 11 tournés vers le second joint 4b, et appuie sur ce second joint 4b par l'intermédiaire de ces reliefs 11.

Grâce à ces dispositions, le joint 4b ne subit que la déformation axiale suffisante pour assurer l'étanchéité à l'intérieur de l'alésage 1a, la différence de pression entre les chambres 6 et 7 restant ainsi négligeable, la longévité du second joint 4b est grandement amélioré par le fait qu'il est moins déformé et moins fortement pressé contre l'alésage 1a, et la purge de la chambre primaire 6 est facilitée par le passage 12 laissé au fluide de freinage entre le joint 4b et la bague 10, à travers les reliefs 11.

## Revendications

1. Maître-cylindre tandem hydraulique comprenant :
- un corps (1) percé d'un alésage essentiellement cylindrique (1a) fermé par un fond (1b);
- des pistons primaire (3) et secondaire (4) susceptibles de coulisser de façon étanche dans l'alésage (1a),
- une chambre de pression primaire (6) définie entre les pistons primaire et secondaire, cette chambre renfermant au moins un premier ressort (8) exerçant entre les pistons une première force élastique qui tend à écarter ces pistons l'un de l'autre ;
- une chambre de pression secondaire (7) définie entre le piston secondaire et le fond, cette chambre renfermant au moins un second ressort (9) exerçant entre le piston secondaire et le fond une seconde force élastique dans un sens qui tend à écarter ce piston secondaire du fond ;
- des premier et second joints (3b, 4b) respectivement portés par les pistons primaire (3) et secondaire (4), pour assurer une étanchéité de la chambre de pression primaire (6), et
- une bague (10) interposée entre le premier ressort (8) et le second joint (4b), montée à coulissement sur une portée (40) du piston secondaire (4), et susceptible de repousser le second joint (4b) contre un épaulement (41) du piston secondaire (4) pour transmettre au second joint (4b) une force de compression variant avec la première force élastique,
caractérisé en ce que la portée (40) du piston secondaire présente une butée (42) limitant le coulissement de la bague (10) en direction du second joint (4b).

2. Maître-cylindre suivant la revendication 1, caractérisé en ce que la bague (10) porte des reliefs (11) tournés vers le second joint (4b) et appuie sur ce second joint (4b) par l'intermédiaire de ces reliefs (11).

## Claims

1. Hydraulic tandem master cylinder comprising:
- a body (1) pierced with an essentially cylindrical bore (1a) closed by an end (1b);
- a primary piston (3) and a secondary piston (4) which are capable of sliding in leaktight fashion in the bore (1a),
- a primary pressure chamber (6) defined between the primary and secondary pistons, this chamber containing at least a first spring (8) exerting a first elastic force between the pistons, which force tends to separate these pistons from one another;
- a secondary pressure chamber (7) defined between the secondary piston and the end, this chamber containing at least a second spring (9) exerting a second elastic force between the secondary piston and the end, which force is in a direction which tends to separate this secondary piston from the end;
- a first seal and a second seal (3b, 4b) respectively borne by the primary piston (3) and secondary piston (4) in order to seal the primary pressure chamber (6), and
- a ring (10) interposed between the first spring (8) and the second seal (4b) slidably mounted on a bearing surface (40) of the secondary piston (4) and capable of pushing the second seal (4b) back against a shoulder (41) of the secondary piston (4) in order to transmit to the second seal (4b) a compressive force which varies with the first elastic force,
characterized in that the bearing surface (40) of the secondary piston has a stop piece (42) limiting the sliding of the ring (10) in the direction of the second seal (4b).

2. Master cylinder according to Claim 1, characterized in that the ring (10) bears reliefs (11) pointing toward the second seal (4b) and bears on this second seal (4b) via these reliefs (11).

## Patentansprüche

1. Hydraulischer Tandemhauptzylinder mit:
- einem Körper (1), der von einer im wesentlichen zylindrischen Bohrung (1a) durchbrochen ist, die mit einem Boden (1b) verschlossen ist;
- einem ersten Kolben (3) und einem zweiten Kolben (4), die auf dichte Weise in der Bohrung (1a) gleiten können;
- einer ersten Druckkammer (6), die zwischen dem ersten und dem zweiten Kolben gebildet ist, wobei diese Kammer mindestens eine erste Feder (8) einschließt, die zwischen den Kolben eine erste elastische Kraft ausübt, die die Kolben voneinander zu entfernen sucht;
- einer zweiten Druckkammer (7), die zwischen dem zweiten Kolben und dem Boden gebildet ist, wobei diese Kammer mindestens eine zweite Feder (9) einschließt, die zwischen dem zweiten Kolben und dem Boden eine zweite elastische Kraft in einer Richtung ausübt, die den zweiten Kolben vom Boden zu entfernen sucht;
- einer ersten und einer zweiten Dichtung (3b, 4b), die jeweils von dem ersten Kolben (3) bzw. dem zweiten Kolben (4) getragen werden, um die Dichtigkeit der ersten Druckkammer (6) zu gewährleisten, und
- einem Ring (10), der zwischen der ersten Feder (8) und der zweiten Dichtung (4b) auf einer Auflagefläche (40) des zweiten Kolbens (4) verschiebbar untergebracht ist und der die zweite Dichtung (4b) gegen eine Schulter (41) des zweiten Kolbens (4) zurückdrücken kann, um auf die zweite Dichtung (4b) eine Kompressionskraft zu übertragen, die mit der ersten elastischen Kraft variiert,
dadurch gekennzeichnet, daß die Auflagefläche (40) des zweiten Kolbens einen Anschlag (42) aufweist, der das Verschieben des Rings (10) in Richtung auf die zweite Dichtung (4b) begrenzt.

2. Hauptzylinder nach Anspruch 1, dadurch gekennzeichnet, daß der Ring (10) Erhebungen (11) trägt, die zur zweiten Dichtung (4b) hin gerichtet sind, und an der zweiten Dichtung (4b) mittels dieser Erhebungen (11) anliegt.
